# EUROPEAN PATENT APPLICATION

(11) **EP 0 558 459 A1**
(43) Date of publication of application: **01.09.1993**
(21) Application number: 93830026.6
(22) Date of filing: 29.01.1993
(51) Int. Cl.: F16B 15/00, B43M 15/00

(54) **Device for fixing sheets and plate-like elements in general**

(30) Priority: 28.02.1992 IT MI920179 U
(71) Applicant: IMPORTOREX S.r.l., I-20159 Milano (MI) (IT)
(72) Inventor: Tovazzi, Luciano, I-20159 Milano (IT)
(74) Representative: Cicogna, Franco

(57) **Abstract**

The present invention relates to a device (1) for fixing sheets and plate-like elements in general, comprising a flattened head (2) therefrom at least a point (3) extends.

The main feature of the invention is that a coating layer (4) is provided, made of an epoxide material, which covers both the head (2) and the point (3).

This epoxide material layer (4) can be made in different colours.

## Description

### BACKGROUND OF THE INVENTION

The present invention relates to a device for fixing sheets and plate-like elements in general.

As is known, there are at present commercially available several types of fixing devices or elements, for fixing sheet elements and plate-like elements in general, which are usually called "drawing pins or points" which comprise a flattened head portion, made as a disc-like plate element, thereon there are formed, by shearing, the point or points which are then bent perpendicularly to the point head.

These points, which are usually made of an iron or the like material, are usually nickel or chromium plated, in order to provide a good surface finishing.

However, the above mentioned points have not been found to be satisfactory in several use fields and, in particular, as the sheets or plate-like elements to be held have been previously processed by means of acid substances, such as in the case of fabric materials, since the vapours or residues evolved by such a material will chemically attack the point surface, and will generate rust on the point itself.

As it should be apparent, this fact is very disadvantageous since, in addition to damaging the point, it can also damage the plate-like element held by said point, since the rust material will be inevitably also transmitted to the sheet or fabric.

Another drawback is that prior points are practically provided with a substantially mirror-like and silvered surface which, in several cases, does not effectly fit, from a merely aesthetic standpoint, with the plate-like element to which the points are applied.

### SUMMARY OF THE INVENTION

Accordingly, the aim of the present invention is to overcome the above mentioned drawbacks, by providing a fixing device for fixing sheets and plate-like elements in general, which is provided with a surface which can not be attacked by outer agents, such as acids or the like, so as to remain practically unaltered in the time.

Within the scope of the above mentioned aim, a main object of the present invention is to provide such a fixing device or point which can be made with different colours and which is suitable to perfectly fit, from an aesthetic standpoint, with the sheet or fabric which must be affixed.

Yet another object of the present invention is to provide such a fixing device which is very reliable and safe in operation and which can be easily made starting from easily available elements and materials and, moreover, is very competitive from a mere economic standpoint .

According to one aspect of the present invention, the above mentioned aim and objects, as well as yet other objects, which will become more apparent hereinafter, are achieved by a fixing device, for sheets and plate-like elements in general, comprising a flattened head therefrom at least a point extends, characterized in that said device comprises a coating layer covering said head and said at least a point.

### BRIEF DESCRIPTION OF THE DRAWINGS

Further characteristics and advantages of the invention will become more apparent hereinafter from the following detailed disclosure of a preferred, though not exclusive, embodiment thereof which is illustrated, by way of an indicative, but not limitative example, in the figures of the accompanying drawing, where:

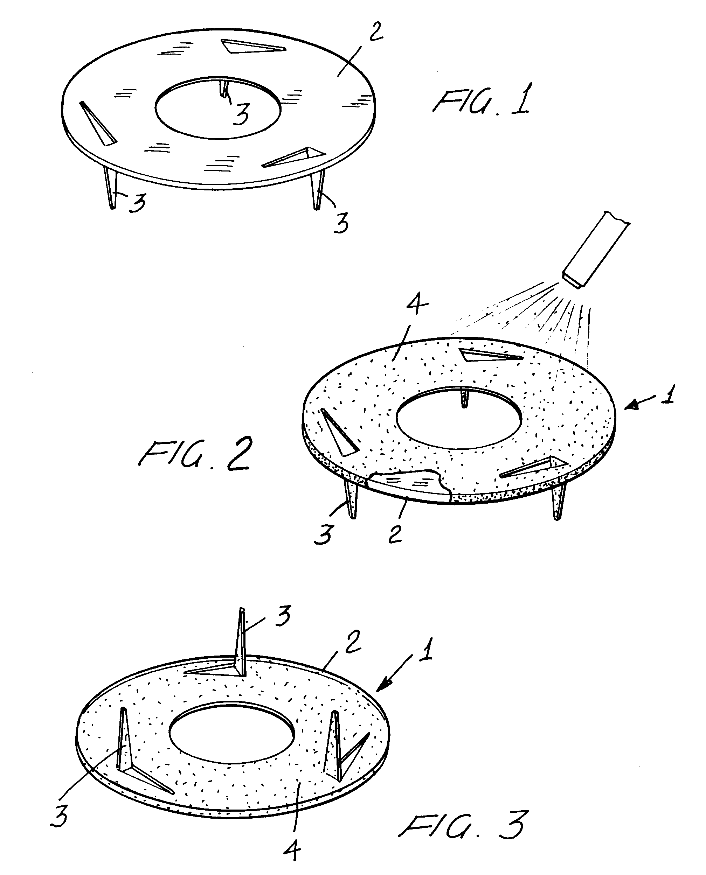

Figure 1 shows the plate-like element in its raw condition;
Figure 2 is a schematic perspective view showing the subject fixing device during a processing step thereof in which a coating layer is applied to said device;
   and
Figure 3 illustrates the fixing device, in its finished condition, and seen in the direction of its bottom face.

### DESCRIPTION OF THE PREFERRED EMBODIMENT

With reference to the number references of the figures of the accompanying drawing, the fixing device, for fixing sheets and plate-like elements in general, according to the present invention, which has been generally indicated at the reference number 1, comprises a flattened head 2, advantageously made starting from a disc plate-like element, thereon there have been formed, for example by shearing, one or more points 3, which have been bent, after the shearing or cutting operation, perpendicuarly to the head 2.

The main feature of the invention is that on the head 2 and points 3 there is applied a coating layer 4, adapted to provide a protecting barrier against a possible attack of outer agents, which would be susceptible to alter the material making the head and points, which usually consists of an iron material.

The coating layer 4 is advantageously coated by spraying an epoxide resin, which, after a suitable processing, will provide a compact layer intimely bound to the metal substrate.

By using the above mentioned epoxide resin, moreover, it is possible to make the fixing device with all of the desired colours, thereby providing a fixing device or point which can be perfectly aesthetically fitted to the several use requirements.

The provision of the epoxide coating material, moreover, by protecting the point from outer agents, will prevent the plate-like element fixed by the point from being damaged.

From the above disclosure it should be apparent that the invention fully achieves the intended aim and objects.

In particular, the fact is to be pointed out that the invention has provided a fixing device which is very flexible in use and, moreover, which can be easily made by conventional making methods and systems.

In practicing the invention, the used material, though the best results have been achieved by using the above mentioned materials, as well as the contingent size and shapes, can be any, according to requirements.

## Claims

1. A fixing device for sheets and plate-like elements in general, comprising a flattened head therefrom at least a point extends, characterized in that said device comprises a coating layer coating said head and said at least a point.

2. A fixing device for sheets and plate-like elements in general, according to Claim 1, characterized in that said coating layer comprises an epoxide material coating layer.

3. A fixing device for sheets and plate-like elements in general, according to Claims 1 and 2, characterized in that said epoxide material layer is intimely bound with its metal support.

4. A fixing device for sheets and plate-like elements in general, according to one or more of the preceding claims, characterized in that said coating layer can be made in several colours.
